(19) Europäisches Patentamt
European Patent Office
Office européen des brevets

(11) **EP 1 639 758 B1**

(12) **EUROPÄISCHE PATENTSCHRIFT**

(45) Veröffentlichungstag und Bekanntmachung des Hinweises auf die Patenterteilung:
**19.06.2013 Patentblatt 2013/25**

(21) Anmeldenummer: **04741456.0**

(22) Anmeldetag: **07.04.2004**

(51) Int Cl.:
***H04L 12/40*** *(2006.01)*

(86) Internationale Anmeldenummer:
**PCT/EP2004/050466**

(87) Internationale Veröffentlichungsnummer:
**WO 2004/111859 (23.12.2004 Gazette 2004/52)**

(54) **VERFAHREN UND VORRICHTUNG ZUM AUSTAUSCH VON DATEN ÜBER EIN BUSSYSTEM**

METHOD AND DEVICE FOR THE EXCHANGE OF DATA VIA A BUS SYSTEM

PROCEDE ET DISPOSITIF POUR L'ECHANGE DE DONNEES PAR L'INTERMEDIAIRE D'UN SYSTEME DE BUS

(84) Benannte Vertragsstaaten:
**AT BE BG CH CY CZ DE DK EE ES FI FR GB GR HU IE IT LI LU MC NL PL PT RO SE SI SK TR**

(30) Priorität: **18.06.2003 DE 10327548**

(43) Veröffentlichungstag der Anmeldung:
**29.03.2006 Patentblatt 2006/13**

(73) Patentinhaber: **ROBERT BOSCH GMBH**
**70442 Stuttgart (DE)**

(72) Erfinder:
• **WEIGL, Andreas**
**76351 Linkenheim-Hochstetten (DE)**
• **HUGEL, Robert**
**76199 Karlsruhe (DE)**

(56) Entgegenhaltungen:
EP-A- 0 522 607   EP-A- 0 622 712
US-A- 6 111 888   US-A1- 2002 067 737
US-A1- 2003 070 019   US-B1- 6 516 364

• **LEEN G ET AL: "TTCAN: a new time-triggered controller area network" MICROPROCESSORS AND MICROSYSTEMS, IPC BUSINESS PRESS LTD. LONDON, GB, Bd. 26, Nr. 2, 17. März 2002 (2002-03-17), Seiten 77-94, XP004339936 ISSN: 0141-9331**

EP 1 639 758 B1

## Beschreibung

Stand der Technik

Die Erfindung betrifft ein Verfahren und eine Vorrichtung sowie ein System zum Austausch von Daten wie Nachrichten zwischen wenigstens zwei Teilechmern, welche mittels eines Bussystems verbunden sind gemäß den unabhängigen Ansprüchen.

Die Vernetzung von Steuergeräten, Sensorik und Aktuatorik mit Hilfe eines Kommunikationssystems bzw. eines Bussystems hat in den letzten Jahren beim Bau von modernen Kraftfahrzeugen oder auch im Maschinenbau, insbesondere im Werkzeugmaschinenbereich, als auch in der Automatisierung, sowie in weiteren industriellen Anwendungen oder auch im privaten Bereich, beispielsweise bei Hausbussystemen, drastisch zugenommen. Dabei können Synergieeffekte durch Verteilung von Funktionen auf mehrere Steuereinheiten erzielt werden. Man spricht hierbei von verteilten Systemen. Die Kommunikation zwischen verschiedenen Stationen bzw. Teilnehmern eines solchen Systems findet mehr und mehr über wenigstens einen Bus bzw. wenigstens ein Bussystem statt. Der Kommunikationsverkehr auf dem Bussystem, Zugriffs- und Empfangsmechanismen sowie Fehlerbehandlung werden über ein Protokoll geregelt.

Als Protokoll im Kfz-Bereich etabliert und auch in anderen Anwendungen in immer größerem Umfang eingesetzt ist CAN (Controller Area Network). Dieses ist ein ereignisgesteuertes Protokoll, d.h. Protokollaktivitäten wie das Senden einer Nachricht werden durch Ereignisse initiiert, die ihren Ursprung außerhalb des Kommunikationssystems haben. Der eindeutige Zugang zum Kommunikationssystem bzw. Bussystem wird über eine prioritätsbasierte Bitarbitrierung gelöst. Eine Voraussetzung dafür ist, dass jeder Nachricht eine Priorität zugewiesen ist. Das CAN-Protokoll ist sehr flexibel; ein Hinzufügen weiterer Knoten und Nachrichten ist damit problemlos möglich, so lange es noch freie Prioritäten (Message Identifier) gibt. Die Sammlung aller im Netzwerk zu sendenden Nachrichten mit Prioritäten und deren Senderknoten sowie möglicherweise Empfangsknoten werden in einer Liste, der sogenannten Kommunikationsmatrix, abgelegt.

Ein alternativer Ansatz zur ereignisgesteuerten, spontanen Kommunikation ist der rein zeitgesteuerte Ansatz. Dabei sind alle Kommunikationsaktivitäten auf dem Bus strikt periodisch. Protokollaktivitäten wie das Senden einer Nachricht werden nur durch das Fortschreiten einer für das gesamte Bussystem gültigen Zeit ausgelöst. Der Zugang zum Medium basiert auf der Zuteilung von Zeitbereichen, in denen ein Sender exklusives Senderecht hat. Dabei ist das Protokoll vergleichsweise unflexibel und ein Hinzufügen von neuen Knoten ist nur dann möglich, wenn zuvor schon die entsprechenden Zeitbereiche freigelassen wurden. Dieser Umstand erzwingt, die Nachrichtenreihenfolge schon vor Inbetriebnahme festzusetzen. Dabei muss auch die Positionierung der Nachrichten innerhalb der Sendeperioden auf die Applikationen abgestimmt werden, die die Nachrichteninhalte produzieren, um die Latenzen zwischen Applikation und Sendezeitpunkt minimal zu halten, da ansonsten, also wenn diese Abstimmung nicht erfolgt, der Vorteil der zeitgesteuerten Übermittlung die minimalen Latenzjitter beim Senden der Nachricht am Bus zerstört würde.

Der in den Patentanmeldungen DE 100 00 302 A1, DE 100 00 303 A1, DE 100 00 304 A1 und DE 100 00 305 A1 und der Publikation "TTCAN: a new time-triggered controller area network "(G. Leen et. al., Microprocessors and Micro-systems, IPC Business Press Ltd., Bd. 26, Nr.2, S. 77-94), sowie dem ISO-Standard 11898-4 gezeigte Lösungsansatz des zeitgesteuerten CAN, des sogenannten TTCAN (Time Triggered Controller Area Network) genügt den oben skizzierten Forderungen nach zeitgesteuerter Kommunikation sowie den Forderungen nach einem gewissen Maß an Flexibilität. TTCAN erfüllt dies durch den Aufbau der Kommunikationsrunde (Basiszyklus) in sogenannte exklusive Zeitfenster für periodische Nachrichten bestimmter Kommunikationsteilnehmer und in sogenannte arbitrierende Zeitfenster für spontane Nachrichten mehrerer Kommunikationsteilnehmer. Der TTCAN basiert im wesentlichen auf einer zeitgesteuerten, periodischen Kommunikation, die durch einen hauptzeitgebenden Teilnehmer oder Knoten, den sogenannten Zeitmaster oder Zeitgeber, mit Hilfe einer Zeitreferenznachricht oder kürzer Referenznachricht getaktet wird. Die Periode bis zur nächsten Referenznachricht wird als Basiszyklus bezeichnet und unterteilt sich in eine vorgebbare Anzahl von Zeitfenstern. Dabei wird zwischen den lokalen Zeiten bzw. lokalen Zeitgebern der einzelnen Teilnehmer und der Zeit des Zeitgebers als globaler Zeit unterschieden. Weitere Grundlagen und Definitionen bezogen auf den TTCAN werden im Nachfolgenden erläutert oder sind aus der ISO 11898-4 sowie dem genannten Stand der Technik zu entnehmen.

Die US 2002/0067737 A1 zeigt einen TDM Bus mit einem Synchronisationsmaster der Rahmensynchronisationssignale erzeugt aus eingehenden Daten mit Synchronisationsmustern. Diese Rahmensynchronisationssignale enthalten keine Zeitinformation und sind fest mit einem freo laufenden Taktgenerator synchronisiert. Die Frequenz des Taktgenerators ist so gewählt dass eine Anzahl Perioden innerhalb eines Rahmens erzeugt wird. Die Perioden, die diese Anzahl innerhalb eines Rahmens übersteigt ergeben I.ccr Perioden, die durch Zeitschlitzzähler identifizierbar sind. Darin ist die Leerzeit, die diesen Perioden entspricht test mit der Frequenz des Taktgenerators verbunden. Eine Anpassung der Pausenzeit bedeutet immer auch eine Änderung der Frequenz des Taktgenerators und damit aller Perioden.

Die US 2003/0070019 A1 zeigt ein Verfahren und eine Vorrichtung zur Übertragung von Informationen auf einem Bussystem mit wenigstens zwei Teilnehmem sowie ein Bussystem, wobei genau ein übergeordneter Teilnehmer (Master) und wenigstens ein untergeordneter Teilnehmer (Slave) vorgesehen sind und die Informationen in einem vorgebbaren, abgeschlossenen Nachrichtenrahmen übertragen werden welcher neben den zu übertragenden Informationen auch Sychronisationsinformationen enthält, wobei unterschiedlichen Informationen unterschiedliche Informationskennzeichen eindeutig zugeordnet sind, wobei nach jedem abgeschlossenen Nachrichtenrahmen eine Anzahl von Informationsabschnitten vorgesehen ist, in welchen der wenigstens eine untergeordnete Teilnehrner Informationen eintragen kann.

Bei der TTCAN-Buskommunikation werden Kommunikationsobjekte, also insbesondere Nachrichten, die fehlerhaft sind und durch ein Errorframe kenntlich bzw. ungültig gemacht werden, nicht wiederholt, um durch die Botschaftswiederholung kein Überschreiten des Zeitfenster bzw. der Zykluszeit zu riskieren, um damit die nachfolgende Nachricht nicht zu behindern. Das Empfangs-Kommunikationsobjekt zu dieser zerstörten Botschaft bzw. Nachricht bleibt unaktualisiert, bis in einem zugehörigen Zeitfenster eine Nachricht fehlerfrei empfangen wird. Im Gegensatz dazu wird eine durch ein Errorframe gekennzeichnete fehlerhafte Referenznachricht wiederholt, da auf diese Referenznachricht nicht verzichtet werden kann. Diese Nachrichtenwiederholung führt dazu, dass der betroffene Basiszyklus um die Zeit vom Beginn der ersten fehlerhaften Referenznachricht bis zum Beginn der fehlerfrei übertragenen Referenznachricht verlängert wird. Jeder dieser Fehler führt zu einer weiteren Verzögerung des zeitlichen Ablaufs mit dem Ergebnis, dass sich diese Verzögerungen zu einer immer größeren Abweichung von der Sollzeit addieren. Eine solche Störung, wie beispielsweise eine fehlerhaft übertragene Referenznachricht führt somit zu einer zeitlichen Änderung bzw. Abweichung von den Sollvorgaben im System. Arbeiten zwei oder mehrere TTCAN-Busse bzw. Bussysteme synchronisiert, so muss eine solche zeitliche Abweichung, insbesondere eine Verzögerung auf einem der Bussysteme auch auf den anderen

Bussystemen vollzogen werden, um wieder Gleichlauf zu erreichen. Damit addieren sich solche zeitlichen Abweichungen auf allen Bussystemen und die Störung bzw. der Fehler pflanze sich fort.

Es ist daher Aufgabe der Erfindung, solche durch Störungen hervorgerufene zeitliche Abweichungen, insbesondere Verzögerungen, auszugleichen und damit eine größere Langzeitgenauigkeit des Zeitablaufs der Kommunikation bzw. Kommunikationsmatrix zu erreichen.

Dabei ist die erfindungsgemäße Lösung nicht zwangsläufig auf den TTCAN beschränkt, sondern ist auf vergleichbare Bussysteme bzw. Protokolle bezüglich der im Nachfolgenden beschriebenen Anforderungen und Randbedingungen erweiterbar. Aus Gründen der Klarheit und Übersichtlichkeit der Darstellung wird im weiteren allerdings vom TTCAN-Bus ausgegangen.

Vorteile der Erfindung

Die Erfindung zeigt ein Verfahren und eine Vorrichtung zum Austausch von Daten in Nachrichten zwischen wenigstens zwei Teilnehmern, welche mittels eines Bussystems verbunden sind, sowie entsprechendes Bussystem, wobei die die Daten enthaltenden Nachrichten durch die Teilnehmer über das Bussystem übertragen werden und die Nachrichten durch einen ersten Teilnehmer zeitlich derart gesteuert werden, dass der erste Teilnehmer wiederholt eine Referenznachricht, welche eine Zeitinformation des ersten Teilnehmers enthält, in wenigstens einem vorgebbaren zeitlichen Abstand über das Bussystem überträgt, wobei der zeitliche Abstand als Basiszyklus in Zeitfenster vorgebbarer Länge unterteilt wird und in den Zeitfenstern die Nachrichten übertragen werden, wobei vorteilhafter Weise bei dem Austausch von Daten am Ende wenigstens eines Basiszyklus eine Pausenzeit von veränderbarer Dauer vorgesehen ist, durch welche eine zeitliche Änderung des Beginns des Basiszyklus durch Anpassung der Dauer der Pausenzeit korrigiert wird, und wobei zum Ausgleichen der zeitlichen Abweichung ein Korrekturwert ermittelt wird, der sich aus einer lokalen Zeit einer Teilnehmers und eine Zykluszeit ergibt, und der als Maß der Korrektur zum Ausgleich der Pausenzeit genutzt wird. Damit kann die oben beschriebene Problematik bei Abweichungen bezüglich der Zykluszeit bei einem oder mehreren Bussystemen beherrscht werden.

Dabei wird vorteilhafter Weise die zeitliche Änderung als zeitliche Verzögerung des Beginns des Basiszyklus durch Verkürzung der Dauer wenigstens einer Pausenzeit korrigiert.

In verschiedenen Anwendungsformen kann dabei eine Pausenzeit am Ende jedes Basiszyklus oder am Ende jedes $2^n$ ten Basiszyklusses oder am Ende jedes $2^n +1$ten Basiszyklus mit n als einer natürlichen Zahl (n $\in$ N) vorgesehen sein.

Bei Betrachtung mehrerer, also wenigstens zweier, aufeinanderfolgender Basiszyklen sind somit auch mehrere Pausenzeiten vorsehbar, entsprechend der verschiedenen Anwendungsformen, so dass eine zeitliche Änderung des Beginns wenigstens eines Basiszyklus auf mehrere, insbesondere wenigstens zwei, Pausenzeiten verteilt und damit eine Korrektur vorgenommen werden kann.

Dazu wird vorteilhafter Weise ein Korrekturwert ermittelt, der sich aus einer lokalen Zeit eines Teilnehmers und einer Zykluszeit ergibt. Zweckmäßiger Weise wird der Korrekturwert aus einer ersten Differenz zweier lokalen Zeiten eines Teilnehmers in zwei aufeinander folgenden Basiszyklen ermittelt. Daneben ist der Korrekturwert abhängig von einer zweiten Differenz zweier Zykluszeiten zweier aufeinander folgender Basiszyklen. Ebenso ist der Korrekturwert zweckmäßiger Weise abhängig von einem Vergleichswert als Summe des zeitlichen Abstands des Basiszyklusses und der oben genannten zweiten Differenz, so dass der Korrekturwert der Differenz der ersten Differenz und des Vergleichswerts entspricht.

Zweckmäßiger Weise kann so bei wenigstens zwei verwendeten Pausenzeiten bei wenigstens zwei aufeinander folgenden Basiszyklen beim Austausch der Daten der Korrekturwert auf die wenigstens zwei Pausenzeiten vorgebbar verteilt werden, so dass, wenn die Dauer einer Pausenzeit zur Korrektur der zeitlichen Abweichung nicht ausreicht, der Zeitausgleich auch über mehrere Pausenzeiten bzw. Basiszyklen möglich ist. Insbesondere kann dabei der Korrekturwert auf die wenigstens zwei Pausenzeiten nicht vorgebbar verteilt, sondern gleichmäßig verteilt werden.

Weitere Vorteile und vorteilhafte Ausgestaltungen ergeben sich aus der Beschreibung und den Merkmalen der Ansprüche.

Zeichnung

Im Weiteren wird die Erfindung anhand der in der Zeichnung dargestellten Figuren näher erläutert. Dabei zeigt

Figur 1 ein Bussystem mit mehreren Teilnehmern,

Figur 2 ein System mit zwei Bussystemen, die miteinander gekoppelt sind,

Figur 3 einen Gesamtryklus zum Austausch von Daten mit mehreren Basiszyklen,

Figur 4 bestehend aus Figur 4a und Figur 4b die Auswirkung einer Störung ohne erfindungsgemäße Pausenzeit,

Figur 5 bestehend aus Figur 5a und 5b die Korrektur einer Störung mit erfindungsgemäßer Pausenzeit und

Figur 6 bestehend aus Figur 6a und 6b mehrere aufeinander folgende Basiszyklen mit Ermittlung einer erfindungsgemäßen Korrektur.

Beschreibung der Ausführungsbeispiele

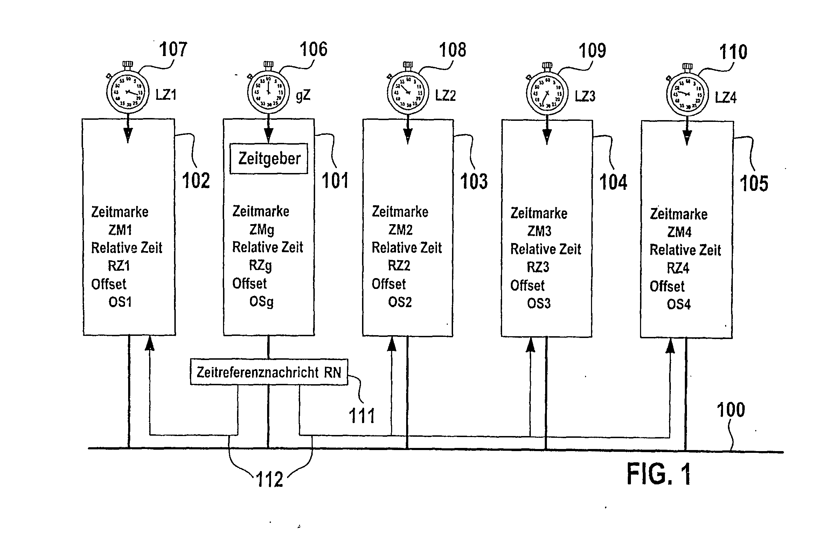

TTCAN basiert im Wesentlichen auf einer zeitgesteuerten periodischen Kommunikation, die durch einen Zeitgeber (Figur 1, 101) mit Hilfe einer Zeitreferenznachricht oder kürzer Referenznachricht RN getaktet wird. Der zeitliche Abstand bzw. die Periode bis zur nächsten Referenznachricht RN hat dabei die Dauer der Zykluszeit ZZ. Figur 1 zeigt ein Bussystem 100 mit mehreren Busteilnehmern 101 bis 105. Jeder Teilnehmer 101 bis 105 besitzt dabei eine eigene Zeitbasis 106 bis 110, die einerseits durch ein internes Mittel, wie beispielsweise eine Uhr, einen Zähler, einen Taktgenerator u.s.w. gebildet oder von Extern zu dem jeweiligen Teilnehmer übertragen werden kann. Die jeweilige lokale Zeitbasis LZ1 bis LZ4 ist beispielsweise insbesondere ein Zähler, zum Beispiel 16 Bit aufwärts zählend, der lediglich durch einen Hard-Reset beeinflusst werden darf. Eine lokale Zeitbasis ist hier in jedem Teilnehmer 102 bis 105 implementiert. Ein spezieller Teilnehmer, der Zeitgeber, hier 101, besitzt dabei eine exponierte Stellung. Seine Zeitbasis 106 wird als globale Zeitbasis mit der globalen Zeit GZ bezeichnet und ist entweder in dem Zeitgeber 101 implementiert oder wird von Extern an diesen Übertragen. Die globale Zeit GZ wird prinzipiell in jedem Teilnehmer aus der lokalen Zeitbasis 107 bis 110 bzw. der lokalen Zeit LZ (LZ1 bis LZ4) und einem Offset OS 1 bis OS4 gebildet. Dieser Offset OSG beim Zeitgeber 101 ist in der Regel gleich 0 (OSG = 0). Alle anderen Teilnehmer bilden ihre Sicht auf die globale Sicht GZ aus ihrer lokalen Zeit LZ (LZ1 bis LZ4) und dem lokalen Offset OS 1 bis OS4 (in Ausnahmefällen auch aus OSG, wenn OSG ≠ 0, zum Beispiel, wenn GZ von Extern an den Zeitgeber 101 übertragen wird und dieser zusätzlich eine eigene Zeitbasis enthält). Der lokale Offset ist dabei die Differenz zwischen der lokalen Zeit zum Sendezeitpunkt (SOF, Start Of Frame), der Referenznachricht RN und der vom Zeitgeber in bzw. mit dieser Referenznachricht RN übertragenen globalen Zeitinformation. Zur Ermittlung spezieller Zeitpunkte, beispielsweise zur Ermittlung des Offsets bezüglich der eigenen lokalen Zeit und der globalen Zeit, können dabei sogenannte Zeitmarken ZM1 bis ZM4 und ZMG dienen, die in Register abgelegt werden können und aus welchen zeitliche Korrekturgrößen, wie beispielsweise der Offset bezüglich der globalen Zeit, oder auch ein Korrekturwert zur Fehlerbehaudlung, insbesondere der erfindungsgemäße Korrekturwert ermittelt werden. Dabei ist eine Zeitmarke ein relativer Zeitpunkt, der die Beziehung zwischen der relativen Zeit und einer Aktion im ursprünglichen Bus (CAN-Controller) herstellt. Eine Zeitmarke ist als Register dargestellt, wobei ein Controller mehrere Zeitmarken verwalten kann. Einer Nachricht können mehrere Zeitmarken zugeordnet sein.

Die Referenznachricht RN ist die Basis für den zeitgesteuerten, periodischen Betrieb von TTCAN und der Pfeil 112 zeigt an, dass die Referenznachricht RN (111) an die übrigen Teilnehmer (102 bis 105) versendet wird. RN ist durch einen speziellen Identifier, eine spezielle Kennung, eindeutig gekennzeichnet und wird von allen Teilnehmern (hier 102 bis 105), als Taktinformation empfangen.

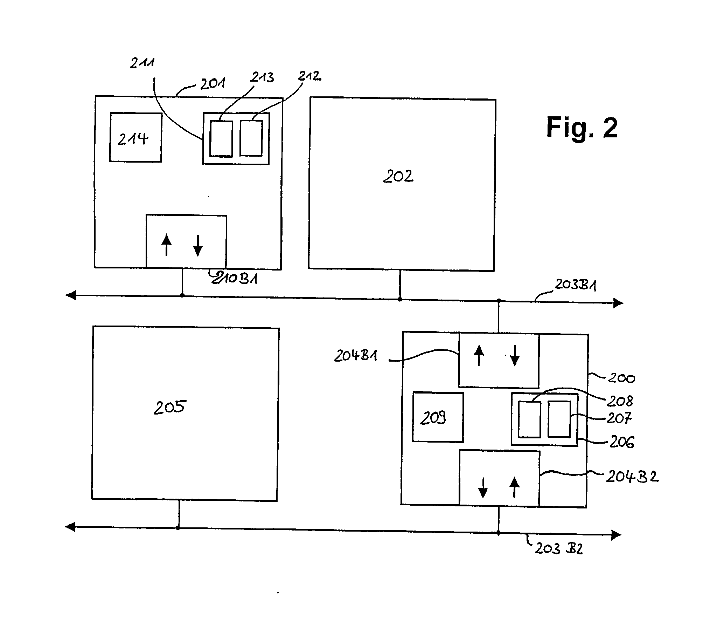

Figur 2 zeigt ein System, bestehend aus mehreren, hier zwei, TTCAN-Bussystemen. Mit 203B1 ist darin ein erster Bus und mit 203B2 ein zweiter Bus dargestellt. Am ersten Bus 203B1 sind zwei Teilnehmer 201 und 202 angekoppelt. Am zweiten Bus 203B2 ist ein Teilnehmer 205 angekoppelt. Der Teilnehmer 200 ist an beide Busse 203B1 und 203B2 angebunden und funktioniert als Verbindungsteilnehmer oder auch als Gatewayrechner bzw. Gatewayteilnehmer oder Gatewaycontroller, welcher auf beide Bussysteme Zugriff hat. Die Verbindung der einzelnen Teilnehmer zum jeweiligen Bussystem erfolgt über ein entsprechendes Schnittstellenelement, beispielsweise bei Teilnehmer 201 über das Schnittstellenelement 210B1. Ebenso ist der Teilnehmer 200 als Gatewayteilnehmer über ein Schnittstellenelement 204B1 mit dem Bus 203B1 sowie über ein

Schnittstellenelement 204B2 mit dem Bus 203B2 verbunden. Alternativ könnte auch im Gegensatz zu zwei Schnittstellenelementen 204B1 und 204B2 ein Schnittstellenelement mit zwei Anschlüssen zur Anbindung an den Bus 203B1 und den Bus 203B2 vorgesehen sein. Weiterhin dargestellt im Teilnehmer 200 bzw. 201 ist ein Taktgeber 211 bzw. 206 bzw. ein Zeitgeberbaustein mit einer internen Taktquelle oder auch lokalen Zeitbasis 207 bzw. 212, insbesondere ein Quarz oder ein Oszillator, insbesondere ein VCO (Voltage Controlled Oszillator). Weiterhin enthalten innerhalb des jeweiligen Zeitgeberbausteins 206 bzw. 211 ist ein Zeiterfassungsbaustein, insbesondere ein Zähler oder Counter 208 bzw.213.

Steuerungsaufgaben im jeweiligen Teilnehmer, insbesondere zur Ein-/Ausgabe von Daten auf das Bussystem, zur Übernahme der Zeitinformation aus dem Zeitgeberbaustein oder auch die Offsetberechnung bzw. Ermittlung der Korrekturwerte zum Vergleich der Zeitmarken sowie zur Synchronisation der Busse bzw. Busteilnehmer und weitere Verfahren und Verfahrensschritte können durch die Bausteine 209 und 214 als Verarbeitungsbausteine, insbesondere ein Mikrocomputer bzw. Mikroprozessor oder auch Controller wahrgenommen werden. Teile dieser Funktionalitäten oder die gesamte Funktionalität kann aber auch direkt im jeweiligen Schnittstellenbaustein vorhanden, also implementiert sein. Neben jedem anderen Teilnehmer kann hierbei auch der Gatewayteilnehmer als Zeitgeber der globalen Zeit, also Versender der Referenznachricht, insbesondere für beide Bussysteme vorgegeben sein. Im Wesentlichen ist somit das System aus wenigstens zwei Bussystemen gemäß Figur 2 für jedes Bussystem wie das System mit einem Bussystem nach Figur 1 zu betrachten, wobei die unterschiedlichen Bussysteme, insbesondere bei sicherheitskritischen Anwendungen, zu synchronisieren sind. Dadurch pflanzen sich dann die in der Einleitung beschriebenen Fehler von einem Bussystem auf das andere fort.

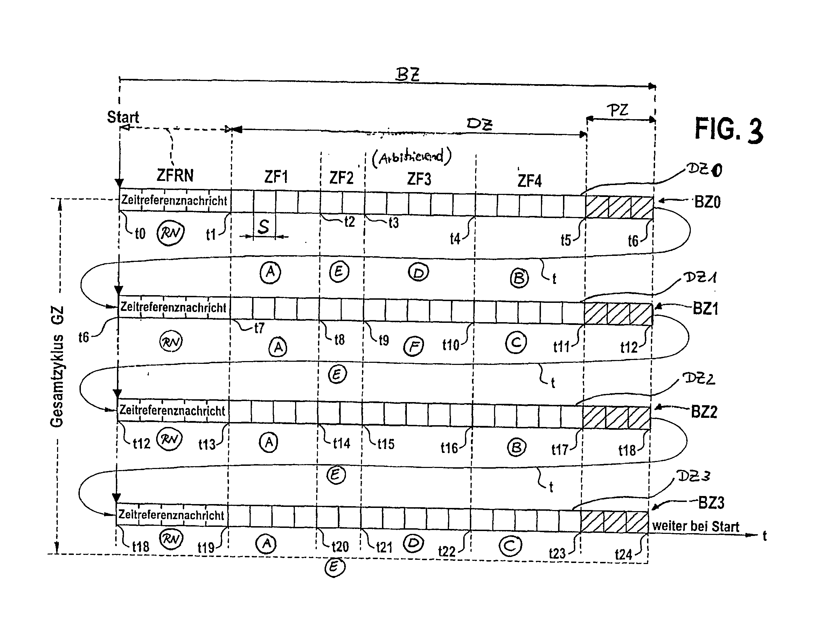

Figur 3 zeigt nun das Prinzip des Austauschs von Daten mittels der zeitgesteuerten, periodischen Nachrichtenübertragung über der Zeit. Diese Nachrichtenübertragung wird durch den Zeitgeber des jeweiligen Bussystems mit Hilfe der Referenznachricht RN getaktet. Per Definition kann dabei der Basiszyklus BZ, wie hier dargestellt, die eigentlichen Zeitfenster für die Nachrichten ZF1 bis ZF4 sowie ZFRN das Zeitfenster für die Referenznachricht und eine Pausenzeit PZ umfassen.. Die Zykluszeit ZZ entspricht imallgemeinen der Zeit für einen solchen Basiszyklus.

Aus Übersichkelikeitsgründen werden im Weiteren als Datenzyklus DZ die Zeitfenster zur Datenübertragung ZF1 bis ZF4 bezeichnet, wobei die Zykluszeit oder Cycle Time ZZ die Referenznachricht RN im Basiszyklus BZ sowie die Pausenzeit PZ, also hier von t0 bis t6, t6 bis t12, t12 bis t18, und t18 bis t24 umfasst. Somit ergeben sich im dargestellten Beispiel 4 Datenzyklen DZ0 bis DZ3 in ebenfalls 4 Basiszyklen BZ0 bis BZ3.

Wie dargestellt werden von t0 bis t1, t6 bis t7, t12 bis t13 und t18 bis t19, also im Zeitfenster ZFRN die Referenznachrichten RN der jeweiligen Basiszyklen BZ0 bis BZ3 übertragen. Die Struktur der einer Referenznachricht RN nachfolgenden Zeitfenster ZF1 bis ZF4, also deren Länge in Segmenten S, deren Anzahl und deren zeitliche Position, ist vorgebbar. Dadurch lässt sich aus mehreren Basiszyklen mit zugehörigen Referenznachrichten, Datenzyklen und Pausenzeiten ein Gesamtzyklus GZ bilden, der bei t0 beginnt und bei t24 endet, um erneut durchlaufen zu werden. Die Zeitfenster ZF1 bis ZF4 umfassen dabei zum Beispiel zwei bis fünf Segmente S mit beispielsweise je 16, 32, 64, u.s.w., Bitzeiten. Die gesendeten Nachrichten sind in Figur 3 eingekreist dargestellt, als RN und A bis F. All diese Nachrichten aller Teilnehmer wenigstens eines Bussystems werden als Komponenten einer Matrix, die den Gesamtzyklus GZ darstellt, organisiert, der sogenannten Kommunikationsmatrix. Diese Kommunikationsmatrix besteht also aus den einzelnen Zyklen BZ0 bis BZ3 mit zugehöriger Referenznachricht RN, entsprechendem Datenzyklus DZ0 bis DZ3 und zugehöriger Pausenzeit PZ. Dabei können diese Datenzyklen DZ0 bis DZ3 wahlweise aus exklusiven und arbitrierenden Komponenten aufgebaut sein. So kann zum einen ein gesamtes Zeitfenster, wie hier ZF3, arbitrierend gemäß CAN vorgegeben werden, oder auch nur ein einzelnes Element eines Basiszyklus bzw. Datenzyklus, wie beispielsweise von t15 bis t16. Dabei kann die Anordnung der Nachrichten (A bis F) innerhalb der Basiszyklen BZ bzw. Datenzyklen DZ frei festgelegt werden. Ein Zeitfenster ZFx wird für exklusive Komponenten mit einem CAN-Nachrichtenobjekt verknüpft, wobei ein Zeitfenster auch freigelassen werden oder für arbitrierende Komponenten genutzt werden kann.

Somit besteht eine Kommunikationsmatrix beim TTCAN erfindungsgemäß entweder aus Basiszyklen mit lauter gleich langen Datenzyklen mit Referenznachricht oder sie kann nach einem oder mehreren Datenzyklen eine Pause, also Pausenzeit PZ, im Datenverkehr anhängen, die (PZ) beispielsweise durch ein Ereignis, wie eine erneute Referenznachricht, beendet wird. In Figur 3 ist in einer speziellen Anwendung nach jedem Datenzyklus also in jedem Basiszyklus eine Pausenzeit PZ, also hier von t5 bis t6, t11 bis t12, t17 bis t18 und t23 bis t24, vorgesehen. Erfindungsgemäß kann eine solche Pausenzeit aber auch nur nach einem Datenzyklus bzw. jeder geraden Anzahl von Datenzyklen, also $2^n$ mit n als natürlicher Zahl, vorgesehen sein. Ebenso kann nach jeder ungeraden Anzahl von Datenzyklen eine solche Pausenzeit PZ vorkommen, also bei $2^n+1$, wieder mit n als natürlicher Zahl. Somit besteht die Länge eines Basiszyklus bzw. die Dauer der Zykluszeit ZZ aus dem Zeitfenster für die Referenznachricht ZFRN, dem Datenzyklus DZ und wie hier in Figur 3 dargestellt der Pausenzeit PZ, also einem größeren festen Teil und einer kleineren Pause. Diese Methode erlaubt nun die Anpassung der Zykluszeit durch Anpassung der Pausenzeit PZ. Damit lassen sich Störungen, insbesondere Verzögerungen durch Nachrichtenwiederholungen speziell der Referenznachricht RN während eines oder mehrerer Zyklen ausgleichen. Eine notwendige, beispielsweise systembedingte Pause nach einem Datenzyklus kann durch Verlängerung dieser zyklischen Pausenzeit PZ zusätzlich erreicht werden. Aus Notationsgründen ist die Pausenzeit PZ in den Basiszyklus aufgenommen. Gleichermaßen kann aber mit Basiszyklus BZ das ZFRN plus DZ bezeichnet werden und die Pausenzeit angehängt betrachtet werden, was aber nur einer anderen Notation entspricht und für den Erfindungsgedanken ebenso zweckmäßig ist und zu keine Einschränkung führen kann.

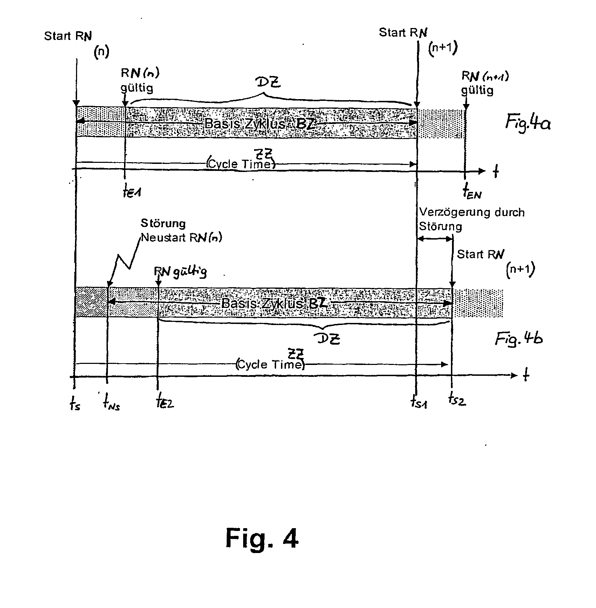

In den nachfolgenden Figuren 4, 5 und 6 wird nun die Erfindung nochmals eingehend erläutert.

Figur 4a zeigt einen normalen Ablauf mit Referenznachricht RN im Basiszyklus BZ ohne Verwendung der genannten Pausenzeit PZ. Zum Zeitpunkt ts startet die Referenznachricht RN(n). Im Zeitpunkt tE 1 ist RN(n) vollständig übertragen und gültig. Am Ende der Zykluszeit oder Cycle Time ZZ startet die nächste Referenznachricht RN(n+1) zum Zeitpunkt ts1, welche dann zum Zeitpunkt tEN gültig ist und sich der nächste Datenzyklus DZ anschließt. Tritt nun, wie in Figur 4b dargestellt, eine Störung auf, erfolgt zum Zeitpunkt tNS ein Neustart dieser Referenznachricht RN(n). D.h., eine durch ein Errorframe gekennzeichnete fehlerhafte Nachricht, beim TTCAN speziell eine fehlerhafte Referenznachricht RN, wird zu diesem Zeitpunkt tNS wiederholt, da auf diese Referenznachricht nicht verzichtet werden kann. Diese wiederholte Referenznachricht RN(n) ist dann zum Zeitpunkt tE2 gültig, woraufhin sich dann der Datenzyklus DZ im Basiszyklus BZ anschließt. Diese Nachrichtenwiederholung führt aber dazu, dass die betroffene Zykluszeit oder Cycle Time ZZ verlängert und der entsprechende Basiszyklus BZ verschoben, insbesondere verzögert wird. D.h., zum eigentlichen Startzeitpunkt der nächsten Referenznachricht RN(n+1) ts1 ist der Basiszyklus BZ noch nicht beendet, erst zum Zeitpunkt ts2. D.h. der Start der nachfolgenden Referenznachricht RN(n+1) erfolgt erst in TS2, wodurch eine Abweichung, insbesondere Verzögerung, durch die Störung von ts2-ts1 entsteht, d.h., die zugehörige Zykluszeit bzw. das Ende des betroffenen Basiszyklus wird um diese Zeit verlängert. Jeder dieser Fehler oder Störungen führt zu einer weiteren Verzögerung des zeitlichen Ablaufs, mit dem Ergebnis, dass sich diese Verzögerungen zu einer immer größeren Abweichung von der Sollzeit addieren. Bei zwei oder mehreren zu synchronisierenden TTCAN-Bussen, entsprechend Figur 2, muss eine solche Verzögerung auf einem der Bussysteme auch auf dem anderen Bussystem vollzogen werden, um wieder Gleichlauf zu erreichen, d.h., die zeitlichen Abweichungen, insbesondere Verzögerungen, addieren sich auf allen Bussystemen, wodurch sich der Fehler bzw. die Störung fortpflanzt. Bei einer Zykluszeit ZZ von beispielsweise 900 Bitzeiten (ts1) und einer Übertragungsdauer für die Referenznachricht RN von 55 Bitzeiten (tE1) ergibt sich somit, wenn der Neustart nach 40 Bitzeiten erfolgen kann (tNS) eine eben solche Verschiebung bzw. Verzögerung durch die Störung von 40 Bitzeiten (ts2-tsl).

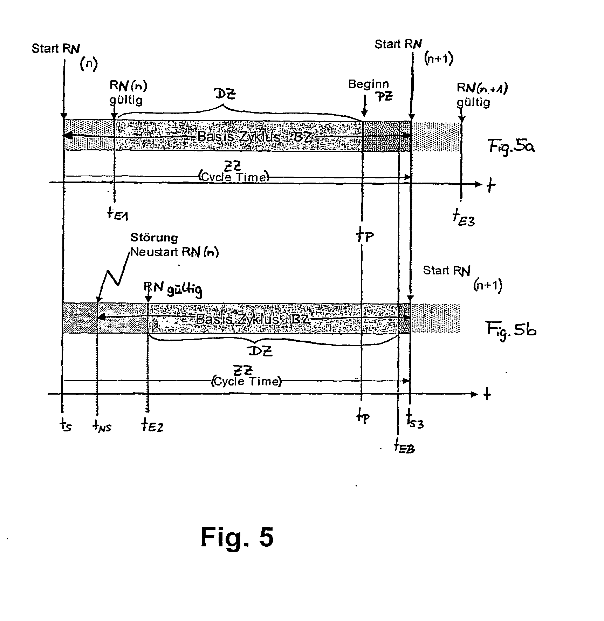

In Figur 5, bestehend aus Figur 5a und 5b, wird nun statt einer bedarfsweisen Verlängerung der Zykluszeit bzw. Verschiebung des konstanten Basiszyklus die Zykluszeit ZZ aus einem konstanten Zeitanteil, eben dem Datenzyklus DZ und der Referenznachricht RN, sowie variablen Anteil, einer regelmäßigen Pause oder Pausenzeit, PZ, bestehen. D.h., die Zykluszeit ZZ ist aufgeteilt in die feste Zeit im fehlerfreien Fall von ts bis tp von beispielsweise 850 Bitzeiten und der Pausenzeit von tp bis ts3 von beispielsweise 50 Bitzeiten, so dass sich wieder, wie bei Figur 4 genannt, im Beispiel die 900 Bitzeiten ergeben. So erfolgt gemäß Figur 5a von ts bis tE 1 wiederum die Übertragung der Referenznachricht RN von tE1 bis tp, die Übertragung des Datenzyklus DZ, an welchen sich die Pausenzeit PZ von tp bis ts3 anschließt. Der gesamte Basiszyklus BZ umfasst somit erfindungsgemäß die Referenznachricht RN, den Datenzyklus DZ und die Pausenzeit PZ, wobei die Zykluszeit dann eine mögliche Störung und eine entsprechende Verzögerung einschließt und damit konstant gehalten werden kann. Dies bedeutet, dass der erfindungsgemäße Basiszyklus des TrCAN vom Beginn der Referenznachricht bis zum Ende einer möglichen Pausenzeit PZ dauert. Es muss aber nicht in jedem Basiszyklus eine Pausenzeit angeschlossen bzw. enthalten sein, d.h., entweder nach Ende der Pausenzeit PZ erfolgt ein Start der neuen Referenznachricht RN(n+1) im Zeitpunkt ts3, die dann im Zeitpunkt tE3 übertragen und gültig ist oder aber bereits am Ende des Datenzyklus DZ wenn in einem Basiszyklus keine Pausenzeit vorgesehen ist, so dass ein Ausgleich einer Abweichung im nächsten Basiszyklus mit Pausenzeit erfolgt.

Tritt nun, wie vorher in Figur 4b, hier in Figur 5b eine Störung auf und erfolgt ein Neustart der Referenznachricht RN(n) im Zeitpunkt tNS, welche im Zeitpunkt tE2 übertragen und gültig ist und beginnt der Basiszyklus BZ somit erst in tE2, endet dieser Zyklus DZ dann zum Zeitpunkt tEB, so kann dies durch Verkürzung der Pausenzeit PZ um tEB-tp = tNS-ts korrigiert werden. Der Start der nachfolgenden Referenznachricht RN(n+1) erfolgt dann, wie vorgesehen, zum Zeitpunkt ts3 bei verkürzter Pausenzeit. Somit wird insgesamt die für den Basiszyklus BZ und die Pausenzeit vorgesehene Zeit verkürzt. Man kann quasi eine verkürzte Basiszykluszeit realisieren, indem die Pausenzeit in ihrer Dauer reduziert wird, eben bis mindestens 0.

Sollte die Länge oder Dauer der Pausenzeit PZ nicht ausreichen, um die Zeitverzögerung, die durch die Wiederholung der Nachricht entsteht, auszugleichen, so kann der Zeitausgleich auch über mehrere Basiszyklen bzw. Pausenzeiten verteilt werden. Diese Verteilung kann zum einen nach einem beliebig vorgebbaren Schema vorgegeben werden: 2/3 auf die erste Pausenzeit, 1/3 auf die zweite Pausenzeit oder auch ¼ auf die erste Pausenzeit, die Hälfte auf die zweite Pausenzeit, ¼ auf die dritte Pausenzeit, u.s.w., oder die Verteilung kann bevorzugter Weise durch Gleichverteilung erzielt werden, also gleiche Anteile entsprechend der Anzahl der Pausenzeiten im Gesamtzyklus GZ. Durch diese Verteilung ist es auch möglich, diese Pausenzeit klein zu halten, da diese Zeit für die Kommunikation auf dem Bus nicht zur Verfügung steht und somit die mögliche Busauslastung reduziert. Wie in Figur 3 dargestellt, wird die mögliche Verkürzung der Zykluszeit in der Kommunikationsmatrix berücksichtigt.

Tritt eine solche Störung bei mehreren miteinander verbundenen und synchronisierten Bussystemen auf, so kann die Korrektur bezüglich der Zykluszeit auch auf dem anderen Buyssystem erfolgen, also auf dem Bussystem, auf dem die Störung nicht aufgetreten ist, was eine hohe Flexibilität bei der Fehlerkorrektur zulässt. D.h. die Verkürzung der Pausenzeit kann auch auf dem Bussystem erfolgen, auf dem die Störung nicht aufgetreten ist, sollte dies beispielsweise aus sicherheitsrelevanten Gründen nötig sein. Ebenso könnte eine Verteilung der Anpassung der Pausenzeit zur Korrektur über mehrere Bussysteme hinweg und damit mehrere Basiszyklen verschiedener Bussysteme hinweg erfolgen. Damit sind über mehrere Bussysteme hinweg zur Synchronisierung durch Verlängerung und Verkürzung der Pausenzeit PZ vielfältigste Möglichkeiten gegeben. So muss auch nicht in jedem Basiszyklus eine Pausenzeit vorgesehen sein sondern kann z.B. am Ende jedes $2^n$ten Basiszyklusses oder am Ende jedes $2^{n+1}$ten Basiszyklus mit n als einer natürlichen Zahl ($n \in N$) vorgesehen sein und damit ein Zeitausgleich bei Störung also nur bei jedem zweiten (ungende oder gerade) Zyklus erfolgen.

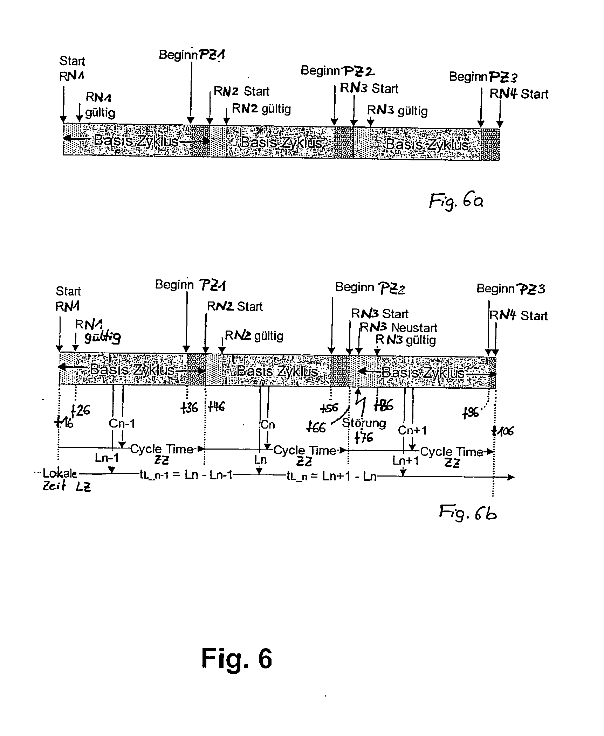

Die Feststellung der Zeitverzögerung durch die Nachrichtenwiederholung der Referenznachricht durch Ermittlung eines Korrekturwertes wird in Figur 6 dargestellt. Dabei ist in Figur 6a ein Ablaufvon drei aufeinanderfolgenden Basiszyklen gegeben, wobei hier der ungestörte Betrieb dargestellt ist. Dabei sind die Startzeitpunkte der jeweiligen Referenznachrichten RN1 bis RN4 dargestellt, die Zeitpunkte der Gültigkeit der jeweiligen Referenznachrichten RN1 bis RN3 sowie Beginn der jeweiligen Pausenzeit PZ1 bis PZ3. Figur 6a zeigt dabei den ungestörten Betrieb zum Austausch der Daten. Figur 6b entspricht im Wesentlichen Figur 6a mit dem Unterschied, dass hier eine Störung auftritt und die Korrektur dieses Fehlers durch Ermittlung eines Korrekturwertes dargestellt ist. Die Zykluszeit wird zum Zeitpunkt der Referenznachricht RNgültig jeweils aktualisiert. Die Zeit zwischen dem Start der gestörten Referenznachricht, hier RN3, und dem Start der erfolgreich beendeten Referenznachricht, also RN3 Neustart, t76-t66, wird ignoriert, und der Zykluszeitzähler auf den Beginn der erfolgreich beendeten Referenznachricht synchronisiert. Damit ist die Verzögerung durch die Störung am Zykluszeitzähler nicht zu erkennen. Diesen Umstand kann man sich erfindungsgemäß zu Nutze machen, wenn man parallel dazu die lokale Zeit betrachtet. Zu einem beliebigen Zeitpunkt im Basiszyklus nach dem Empfang der Referenzbotschaft wird sowohl die Zykluszeit (Cycle Time ZZ), als auch die lokale Zeit (Lokal Time LZ) gelesen. Zur Berechnung der Laufzeit seit der letzten Messung wird die Differenz zwischen gelesener Lokalzeit und der Messung im vorherigen Basiszyklus gebildet. Als Vergleichswert wird die Differenz zwischen der Basiszykluslänge und der ausgelesenen Zykluszeit im vorigen Basiszyklus errechnet und zur aktuell gelesenen Zykluszeit addiert. Die Differenz zwischen der errechneten lokalen Zeitdifferenz und dem errechneten Vergleichswert der Zykluszeit ergibt die Zeitverzögerung durch Nachrichtenwiederholungen der Referenznachrichten. Die jeweiligen Zeitpunkte der Cycle Time sind mit C und die jeweiligen Zeitpunkte der Lokal Time mit L bezeichnet. Somit ergibt sich als Differenz der Lokal Time zur Ermittlung des Korrekturwerts bezüglich der Störung bei t76:

$$tLn = Ln+1 - Ln \text{ oder hier: } tL2 = L3 - L2.$$

Als Vergleichswert für die Cycle Time ergibt sich:

tnVergleich=(Länge der Zykluszeit ZZ-Cn + Cn+1) oder hier:

t2Vergleich=900 Bitzeiten - C2 + C3.

Damit ergibt sich ein Korrekturwert K mit tL2-t3 Vergleich. Dieser Korrekturwert ist das Maß zur einmaligen oder verteilten Verkürzung der regelmäßigen Pausenzeit PZ.

## Patentansprüche

1. Verfahren zum Austausch von Daten in Nachrichten zwischen wenigstens zwei Teilnehmern (101-105), welche mittels eines Bussystems (100) verbunden sind, wobei die die Daten enthaltenden Nachrichten durch die Teilnehmer über das Bussystem übertragen werden
und die Nachrichten durch einen ersten Teilnehmer (101) zeitlich derart gesteuert werden, dass der erste Teilnehmer wiederholt eine Referenznachricht (111), welche eine Zeitinformation des ersten Teilnehmers enthält, in wenigstens einem vorgebbaren, zeitlichen Abstand über das Bussystem überträgt, wobei der zeitliche Abstand als Basiszyklus (BZ) in Zeitfenster (ZF1, ZF2, ...) vorgebbarer Länge unterteilt wird und in den Zeitfenstern die Nachrichten (A, B, C, ...) übertragen werden,
**dadurch gekennzeichnet, dass** bei dem Austausch von Daten eine Kommunikationsmatrix verwendet wird, die wenigstens zwei Basiszyklen umfasst,
und dass am Ende wenigstens eines Basiszyklus in der Kommunikationsmatrix eine Pausenzeit (PZ) von veränderbarer Dauer vorgesehen ist, durch welche eine zeitliche Abweichung des Beginns des Basiszyklus durch Anpassung der Dauer der Pausenzeit innerhalb der Kommunikationsmatrix Korrigiert wird, wobei zum Ausgleichen der zeitlichen Abweichung ein Korrekturwert ermittelt wird, der sich aus einer Lokalen Zeit eines Teilnehmers und einer Zykluszeit ergibt, und der als Maß der Korrektur zum Ausgleich der Pausenzeit genutzt wird.

2. Verfahren nach Anspruch 1, **dadurch gekennzeichnet, dass** die zeitliche Abweichung als zeitliche Verzögerung des Beginns des Basiszyklus durch Verkürzung der Dauer wenigstens einer Pausenzeit Korrigiert wird.

3. Verfahren nach Anspruch 1, **dadurch gekennzeichnet, dass** wenigstens zwei Bussysteme miteinander synchronisiert werden und die zeitliche Abweichung des Beginns des Basiszyklus eines ersten Bussystems durch Anpassung der Dauer der Pausenzeit eines zweiten Bussystems Korrigiert wird.

4. Verfahren nach Anspruch 1, **dadurch gekennzeichnet dass** am Ende jedes Basiszyklus eine Pausenzeit vorgesehen ist.

5. Verfahren nach Anspruch 1, **dadurch gekennzeichnet dass** am Ende jedes 2'-ten Basiszyklus eine Pausenzeit vorgesehen ist, wobei $n \in N$, also n einer natürlichen Zahl entspricht.

6. Verfahren nach Anspruch 1, **dadurch gekennzeichnet dass** am Ende jedes $2^n+1$-ten Basiszyklus eine Pausenzeit vorgesehen ist, wobei $n \in N$, also n einer natürlichen Zahl entspricht

7. Verfahren nach Anspruch 1, **dadurch gekennzeichnet, dass** bei dem Austausch von Daten am Ende wenigstens zweier Basiszyklen jeweils eine Pausenzeit von veränderbarer Dauer vorgesehen ist, durch welche eine zeitliche Abweichung des Beginns wenigstens eines Basiszyklus durch Anpassung der Dauer der wenigstens zwei Pausenzeiten Korrigiert wird.

8. Verfahren nach Anspruch 1, **dadurch gekennzeichnet, dass** der Korrekturwert aus einer ersten Differenz zweier lokaler Zeiten eines Teilnehmers in zwei aufeinanderfolgenden Basiszyklen ermittelt wird.

9. Verfahren nach Anspruch 1, **dadurch gekennzeichnet, dass** der Korrekturwert aus einer zweiten Differenz zweier Zykluszeiten zweier aufeinanderfolgender Basiszyklen ermittelt wird.

10. Verfahren nach Anspruch 9, **dadurch gekennzeichnet, dass** der Korrekturwert aus einem Vergleichswert als Summe des zeitlichen Abstands des Basiszyklus und der zweiten Differenz ermittelt wird.

11. Verfahren nach Anspruch 10, **dadurch gekennzeichnet, dass** der Korrekturwert der Differenz der ersten Differenz und dem Vergleichswert entspricht.

12. Verfahren nach Anspruch 1, **dadurch gekennzeichnet, dass** wenigstens zwei Pausenzeiten bei wenigstens zwei aufeinander folgenden Basiszyklen beim Austausch der Daten vorgesehen sind und der Korrekturwert auf die wenigstens zwei Pausenzeiten vorgebbar verteilt wird.

13. Verfahren nach Anspruch 12, **dadurch gekennzeichnet, dass** der Korrekturwert auf die wenigstens zwei Pausenzeiten gleichmäßig verteilt wird.

14. Vorrichtung zum Austausch von Daten in Nachrichten zwischen wenigstens zwei Teilnehmern (101-105), welche mittels eines Bussystems (100) verbunden sind, wobei die, die Daten enthaltenden Nachrichten durch die Teilnehmer über das Bussystem übertragen werden und die Nachrichten durch einen ersten Teilnehmer (101) zeitlich derart gesteuert werden, dass der erste Teilnehmer wiederholt eine Referenznachricht (111), welche eine Zeitinformation des ersten Teilnehmers enthält, in wenigstens einem vorgebbaren, zeitlichen Abstand über das Bussystem überträgt, wobei der zeitliche Abstand als Basiszyklus (BZ) in Zeitfenster (ZF1, ZF2, ...) vorgebbarer Länge unterteilt wird und in den Zeitfenstern die Nachrichten (A, B, C, ...) übertragen werden, **dadurch gekennzeichnet, dass** bei dem Austausch von Daten eine Kommunikationsmatrix verwendet wird, die wenigstens zwei Basiszyklen umfasst, und dass am Ende wenigstens eines Basiszyklus in der Kommunikationsmatrix eine Pausenzeit (PZ) von veränderbarer Dauer vorgesehen ist, durch welche eine zeitliche Abweichung des Beginns des Basiszyklus durch Anpassung der Dauer der Pausenzeit innerhalb der Kommunikationsmatrix Korrigiert wird, wobei zum Ausgleichen der zeitlichen Abweichung ein Korrekturwert ermittelt wird, der sich aus einer Lokalen Zeit eines Teilnehmers und einer Zykluszeit ergibt, und der als Maß der Korrektur zum Ausgleich der Pausenzeit genutzt wird.

**Claims**

1. Method for interchanging data in messages between at least two subscribers (101-105) which are connected by means of a bus system (100), wherein the messages containing the data are transmitted by the subscribers via the bus system and the timing of the messages is controlled by a first subscriber (101) such that the first subscriber repeatedly transmits a reference message (111), which contains a piece of time information from the first subscriber, via the bus system at at least one prescribable interval of time, wherein the interval of time is divided as a base cycle (BZ) into time windows (ZF1, ZF2, ...) of prescribable length and the time windows are used to transmit the messages (A, B, C, ...), **characterized in that** the interchange of data involves the use of a communication matrix which comprises at least two base cycles,

and **in that** the end of at least one base cycle in the communication matrix is provided with a pause time (PZ) of alterable duration which corrects a time discrepancy at the beginning of the base cycle by adjusting the duration of the pause time within the communication matrix,

wherein the time discrepancy is equalized by ascertaining a correction value which is obtained from a local time on a subscriber and a cycle time and which is used as a measure of the correction for equalizing the pause time.

2. Method according to Claim 1, **characterized in that** the time discrepancy as a time delay at the beginning of the base cycle is corrected by shortening the duration of at least one pause time.

3. Method according to Claim 1, **characterized in that** at least two bus systems are synchronized to one another and the time discrepancy at the beginning of the base cycle of a first bus system is corrected by adjusting the duration of the pause time of a second bus system.

4. Method according to Claim 1, **characterized in that** the end of every base cycle is provided with a pause time.

5. Method according to Claim 1, **characterized in that** the end of every $2^n$-th base cycle is provided with a pause time, where $n \in N$, that is to say that n corresponds to a natural number.

6. Method according to Claim 1, **characterized in that** the end of every $2^n+1$-th base cycle is provided with a pause time, where $n \in N$, that is to say that n corresponds to a natural number.

7. Method according to Claim 1, **characterized in that** the interchange of data involves the end of at least two base cycles each being provided with a pause time of alterable duration which corrects a time discrepancy at the beginning of at least one base cycle by adjusting the duration of the at least two pause times.

8. Method according to Claim 1, **characterized in that** the correction value is ascertained from a first difference between two local times on a subscriber in two successive base cycles.

9. Method according to Claim 1, **characterized in that** the correction value is ascertained from a second difference between two cycle times from two successive base cycles.

10. Method according to Claim 9, **characterized in that** the correction value is ascertained from a comparison value as the sum of the interval of time between the base cycle and the second difference.

11. Method according to Claim 10, **characterized in that** the correction value corresponds to the difference between the first difference and the comparison value.

12. Method according to Claim 1, **characterized in that** at least two pause times for at least two successive base cycles are provided for the interchange of the data, and the correction value is distributed over the at least two pause times in prescribable fashion.

13. Method according to Claim 12, **characterized in that** the correction value is distributed over the at least two pause times evenly.

14. Apparatus for interchanging data in messages between at least two subscribers (101-105) which are connected by means of a bus system (100), wherein the messages containing the data are transmitted by the subscribers via the bus system and the timing of the messages is controlled by a first subscriber (101) such that the first subscriber repeatedly transmits a reference message (111), which contains a piece of time information from the first subscriber, via the bus system at at least one prescribable interval of time,

wherein the interval of time is divided as a base cycle (BZ) into time windows (ZF1, ZF2, ...) of prescribable length and the time windows are used to transmit the messages (A, B, C, ...),

**characterized in that** the interchange of data involves the use of a communication matrix which comprises at least two base cycles,

and **in that** the end of at least one base cycle in the communication matrix is provided with a pause time (PZ) of alterable duration which corrects a time discrepancy at the beginning of the base cycle by adjusting the duration of the pause time within the communication matrix,

wherein the time discrepancy is equalized by ascertaining a correction value which is obtained from a local time on a subscriber and a cycle time and which is used as a measure of the correction for equalizing the pause time.

## Revendications

1. Procédé d'échange de données contenues dans des messages échangés entre au moins deux partenaires de communication (101-105) reliés au moyen d'un système de bus (100),
les messages contenant les données étant transmis sur le système de bus par les partenaires de communication,
les messages étant commandés temporellement par un premier partenaire de communication (101) par le fait que le premier partenaire de communication répète sur le système de bus et à au moins une distance temporelle prédéterminée un message de référence (111) qui contient une information temporelle du premier partenaire de communication,
la distance temporelle étant divisée en tant que cycle de base (BZ) en fenêtres temporelles (ZF1, ZF2, ...) de longueur prédéterminée et les messages (A, B, C, ...) étant transmis dans les fenêtres temporelles, **caractérisé en ce que**
l'échange de données utilise une matrice de communication qui comporte au moins deux cycles de base,
**en ce qu'**une durée de pause (PZ) de durée modifiable par laquelle un écart temporel du début du cycle de base est corrigé par adaptation de la durée de la pause est prévue dans la matrice de communication à la fin d'au moins un cycle de base de la matrice de communication et
**en ce qu'**une valeur de correction qui résulte du temps local d'un partenaire de communication et d'une durée de cycle est déterminée pour compenser l'écart temporel et est utilisée comme mesure de la correction de compensation de la durée de pause.

2. Procédé selon la revendication 1, **caractérisé en ce que** l'écart temporel qui constitue un retard temporel du début du cycle de base est corrigé par raccourcissement de la durée d'au moins une pause.

3. Procédé selon la revendication 1, **caractérisé en ce qu'**au moins deux systèmes de bus sont synchronisés l'un par rapport à l'autre et **en ce que** l'écart temporel du début du cycle de base d'un premier système de bus est corrigé par adaptation de la durée de pause du deuxième système de bus.

4. Procédé selon la revendication 1, **caractérisé en ce qu'**une durée de pause est prévue à la fin de chaque cycle de base.

5. Procédé selon la revendication 1, **caractérisé en ce qu'**une durée de pause est prévue à la fin de chaque $2^n$-ème cycle de base, $n \varepsilon N$, n étant un nombre naturel.

6. Procédé selon la revendication 1, **caractérisé en ce qu'**une durée de pause est prévue à la fin de chaque $2^n+1$-ème cycle de base, $n \varepsilon N$, n étant un nombre naturel.

7. Procédé selon la revendication 1, **caractérisé en ce que** lors de l'échange de données, une durée de pause de durée modifiable par laquelle un écart temporel du début d'au moins un cycle de base est corrigé par adaptation de la durée des deux ou plusieurs pauses est prévue à la fin d'au moins deux cycles de base.

8. Procédé selon la revendication 1, **caractérisé en ce que** la valeur de correction est déterminée à partir d'une première différence entre deux temps locaux d'un partenaire de communication dans deux cycles de base successifs.

9. Procédé selon la revendication 1, **caractérisé en ce que** la valeur de correction est déterminée à partir d'une deuxième différence de deux durées de deux cycles de base successifs.

10. Procédé selon la revendication 9, **caractérisé en ce que** la valeur de correction est déterminée à partir d'une valeur de comparaison qui est la somme de l'écart temporel du cycle de base et de la deuxième différence.

11. Procédé selon la revendication 10, **caractérisé en ce que** la valeur de correction de la différence correspond à la première différence et à la valeur de comparaison.

12. Procédé selon la revendication 1, **caractérisé en ce que** lors de l'échange des données, au moins deux durées de pause sont prévues pour au moins deux cycles de base successifs et la valeur de correction est répartie de manière prédéterminée entre les deux durées de pause.

13. Procédé selon la revendication 12, **caractérisé en ce que** la valeur de correction est répartie de manière identique sur les deux ou plusieurs durées de pause.

14. Dispositif d'échange de données contenues dans des messages échangés entre au moins deux partenaires de communication (101-105) reliés au moyen d'un système de bus (100), les messages contenant les données étant transmis sur le système de bus par les partenaires de communication,

les messages étant commandés temporellement par un premier partenaire de communication (101) par le fait que le premier partenaire de communication envoie de manière répétée sur le système de bus un message de référence (111) qui contient une information temporelle du premier partenaire de communication à au moins une distance temporelle prédéterminée,

la distance temporelle constituant un cycle de base (BZ) étant divisée en fenêtres temporelles (ZF1, ZF2, ...) de longueur prédéterminée et les messages (A, B, C, ...) étant transmis dans les fenêtres temporelles,

**caractérisé en ce que**

l'échange de données utilise une matrice de communication qui comporte au moins deux cycles de base,

**en ce qu'**une durée de pause (PZ) de durée modifiable par laquelle un écart temporel du début du cycle de base est corrigé par adaptation de la durée de la pause est prévue dans la matrice de communication à la fin d'au moins un cycle de base de la matrice de communication et

**en ce qu'**une valeur de correction qui résulte du temps local d'un partenaire de communication et d'une durée de cycle est déterminée pour compenser l'écart temporel et est utilisée comme mesure de la correction de compensation de la durée de pause.

FIG. 1

EP 1 639 758 B1

# Fig. 2

FIG. 3

EP 1 639 758 B1

Fig. 4a

Fig. 4b

Fig. 4

Fig. 5

Start
RN1

Beginn PZ1

RN1
gültig

RN2 Start

RN2 gültig

Beginn PZ2

RN3 Start

RN3 gültig

Beginn PZ3

RN4 Start

Basis Zyklus    Basis Zyklus    Basis Zyklus

Fig. 6a

Start
RN1

Beginn PZ1

RN2 Start

RN1
gültig

RN2 gültig

Beginn PZ2

RN3 Start

RN3 Neustart

RN3 gültig

Beginn PZ3

RN4 Start

Basis Zyklus    Basis Zyklus    Basis Zyklus

t26

t36 t46

t56

t86

t96

t16

Cn-1

Cn

t66

Störung
t76

Cn+1

t106

Cycle Time
ZZ

Cycle Time
ZZ

Cycle Time
ZZ

Ln-1

Ln

Ln+1

Lokale
Zeit LZ

tL_n-1 = Ln - Ln-1

tL_n = Ln+1 - Ln

Fig. 6b

# Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10000302 A1
- DE 10000303 A1
- DE 10000304 A1
- DE 10000305 A1
- US 20020067737 A1
- US 20030070019 A1

**In der Beschreibung aufgeführte Nicht-Patentliteratur**

- TTCAN: a new time-triggered controller area network. **G. LEEN.** Microprocessors and Micro-systems. IPC Business Press Ltd, vol. 26, 77-94